# EUROPEAN PATENT APPLICATION

(11) **EP 4 722 177 A1**
(43) Date of publication of application: **08.04.2026**
(21) Application number: 24204314.9
(22) Date of filing: 02.10.2024
(51) Int. Cl.: C04B 28/04

(54) **HYDRAULIC CEMENT COMPOSITION**

(71) Applicant: Holcim Technology Ltd, 6300 Zug (CH)
(72) Inventor: VU, Quoc Huy, 38070 Saint Quentin Fallavier (FR); XENOPOULOS, Constantinos, 38070 Saint Quentin Fallavier (FR); ZHANG, Qing, 38070 Saint Quentin Fallavier (FR)
(74) Representative: SONN Patentanwälte GmbH & Co KG

(57) **Abstract**

A hydraulic cement composition comprising ≥ 45 wt.-% Portland cement and ≤ 55 wt.-% of a mineral composition, said mineral composition consisting of calcined clay and limestone in a weight ratio of calcined clay/limestone of > 3, wherein the limestone is present in an amount of 1-9 wt.-% based on the hydraulic cement composition.

## Description

The invention refers to a hydraulic cement composition, as well as to a cement matrix formed by chemically reacting a hydraulic cement composition with water.

Cement production is one of the most significant sources of anthropogenic carbon dioxide (CO₂) emissions, accounting for approximately 7-8% of global CO₂ emissions. This is primarily due to the fact that the production of traditional Portland cement involves the calcination of limestone (calcium carbonate), a process that releases a significant amount of CO₂. Furthermore, the energy-intensive nature of cement production, which often involves burning fossil fuels, contributes additional CO₂ emissions.

Low-carbon cements, also known as green or sustainable cements, have been developed to address these environmental concerns. These types of cements aim to significantly reduce the carbon footprint associated with cement production. This is achieved by altering the composition and manufacturing process of the cement, in order to decrease the amount of CO₂ produced per unit of cement produced.

One of the main ways in which low-carbon cements achieve this reduction is by replacing some of the clinker with other materials. Examples of such substitutions include the use of industrial byproducts such as fly ash and slag, as well as naturally occurring materials like pozzolana, or calcined clays. An example of a low-carbon cement is the Limestone Calcined Clay Cement (LC3), a composite binder comprising Ordinary Portland Cement (OPC), calcined clay, and limestone.

However, the replacement of OPC, depending on the type of substitute, may lead to reduced creep resistance of cement, potentially compromising the long-term structural stability of concrete elements subjected to sustained loads. Creep resistance plays a pivotal role in maintaining structural integrity by mitigating gradual deformation under sustained loading conditions, such as those experienced by bridges, high-rise buildings, and pavements over time.

The use of metakaolin as an agent to reduce creep in cement was demonstrated by Brooks and Johari: "Effect of metakaolin on creep and shrinkage of concrete", Cement & Concrete Composites 23 (2001) 495-502. However, the use of pure metakaolin has little relevance from an industrial point of view, since naturally occurring clays often comprise different types of clay minerals and varying proportions of kaolinite. There is therefore a need to find alternatives to pure metakaolin to increase creep resistance of low carbon cements.

In order to solve this object, a first aspect of the invention provides a hydraulic cement composition comprising ≥ 45 wt.-% Portland cement and ≤ 55 wt.-% of a mineral composition, said mineral composition consisting of calcined clay and limestone in a weight ratio of calcined clay/limestone of > 3, wherein the limestone is present in an amount of 1-9 wt.-% based on the hydraulic cement composition.

The present invention offers a novel approach to addressing the challenge of reduced creep resistance in low-carbon cements by incorporating a specific mineral composition comprising calcined clay and limestone. This mineral composition, when used in the prescribed proportions, enhances the creep resistance of the resulting cement matrix while maintaining the benefits of reduced carbon footprint associated with low-carbon cements.

The inventors have discovered that by replacing a portion of the Ordinary Portland Cement (OPC) with a mineral composition consisting of calcined clay and limestone in a weight ratio of calcined clay/limestone greater than 3, and by limiting the limestone content to 1-9 wt.-% based on the total weight of the hydraulic cement composition, the creep resistance of the resulting cement can be significantly improved. This improvement in creep resistance is achieved without compromising the compressive strength of the cement.

On the one hand, the presence of limestone in conjunction with calcined clay has been found to have a more pronounced positive effect on creep resistance compared to the incorporation of calcined clay alone. Further, selecting a weight ratio of calcined clay/limestone greater than 3, and limiting the limestone content to 1-9 wt.-% results in improved creep resistance when compared to known LC3 cements that typically have a weight ratio of calcined clay/limestone of 2 or less.

Furthermore, the invention provides a practical and industrially relevant solution by offering the possibility of utilizing low-grade calcined clay, which is characterized by a lower metakaolin content. This approach recognizes the variability in the composition of naturally occurring clays and offers a more feasible alternative to the use of pure metakaolin, which has limited availability.

In a preferred embodiment of the invention, the limestone is present in an amount of 3-9 wt.-%, preferably 3-7 wt.-%, preferably 3-5 wt.-%, based on the hydraulic cement composition. This specific range of limestone content has been found to provide optimal results in terms of enhancing the creep resistance of the resulting cement matrix. By maintaining the limestone content within this range, the invention ensures that the synergistic effect between the calcined clay and limestone is maximized, leading to a significant improvement in the creep resistance of the low-carbon cement.

In another preferred embodiment of the invention, the weight ratio of calcined clay to limestone in the mineral composition is 3.3-10. This specific range has been found to provide optimal results in terms of enhancing the creep resistance of the resulting cement matrix while maintaining other desirable properties.

In yet another preferred embodiment of the invention, the mineral composition, consisting of calcined clay and limestone, is present in an amount of 15-55 wt.-%, preferably 30-55 wt.-%, based on the hydraulic cement composition. If the hydraulic cement composition of the invention does not contain any other components than Portland cement and the mineral composition, this range corresponds to a substitution rate of Ordinary Portland Cement (OPC) by the mineral composition of 15-55 wt.-%, preferably 30-55 wt.-%. The inventors have discovered that the beneficial effects of the invention, namely the enhancement of creep resistance in low-carbon cements, can be observed over this broad range of substitution rates. The ability to achieve improved creep resistance over such a wide range of OPC substitution rates allows for the production of low-carbon cements with varying degrees of OPC replacement, depending on the specific requirements of the application.

Preferably, the mineral composition and the Portland cement together constitute > 90 wt.-%, preferably > 95 wt.-%, preferably 100 wt.-%, of the hydraulic cement composition. In this embodiment, the hydraulic cement composition of the invention has only two main components, i.e. ≥ 45 wt.-% Portland cement and ≤ 55 wt.-% of the mineral composition, with minor additions being present in an amount of not more than 10 wt.-%, preferably 5 wt.-%, or even excluding the presence of further components.

In another preferred embodiment of the invention, the calcined clay comprises less than 50 wt.-% metakaolin, such as 40-50 wt.-% metakaolin. By allowing for the use of calcined clay with a lower metakaolin content, the invention enables the utilization of a wider range of clay sources, including those with lower kaolinite content. This flexibility in raw material sourcing not only expands the availability of suitable clay resources but also reduces the environmental impact associated with the extraction and processing of high-grade kaolin clays. The use of calcined clay with a metakaolin content below 50 wt.-% also contributes to the cost-effectiveness of the invention. Lower grade clays with reduced kaolin content are often more readily available and less expensive compared to high-grade kaolin clays.

In another preferred embodiment of the invention, the calcined clay is a clay that has been obtained by calcining a kaolinitic raw clay, such as a raw clay having a kaolinite content of 10-80 wt.-% or 10-70 wt.-% or 20-60 wt.-% or 30-50 wt.-% or 40-50 wt.-%.

The kaolinitic raw clay may contain, in addition to kaolinite, muscovite, illite and/or bentonite.

In another embodiment, the kaolinitic clay may further comprise quartz.

After calcination, the content of the amorphous phase measured by X-ray diffraction (XRD, Rietveld method, and based on the total weight of the calcined clay may preferably range from 10 wt.-% to 70 wt.-%, or from 10 wt.-% to 60 wt.-%, or from 20 wt.-% to 50 wt.-% or from 30 wt.-% to 40 wt.40-%.

When referring to the calcination of raw clay in order to obtain calcined clay, this is understood to mean the activation of the raw clay material by at least partly dehydroxylating clay minerals at an elevated temperature so as to obtain pozzolanic properties. The process of dehydroxylation leads to damage in the crystal structure of clay minerals and results, inter alia, to an increased exposure of Al ions on the surface of the mineral grains and increased solubility. The dehydroxylation temperature depends on the structure of the minerals and can range from 350°C to 900°C, and for its full effect in most cases the raw clay material must be heated to temperatures between 600 and 800°C.

When calcining kaolinitic raw clay, the calcination temperature shall be maintained in a range that preserves the amorphous, reactive structure of the calcined product. Dehydroxylation, which occurs between 600-900°C, involves the removal of chemically bound water (hydroxyl groups) from the kaolinitic clay minerals, transforming them into an amorphous, reactive state. However, if the temperature is too high (above 900°C), the amorphous structure of the calcined clay may begin to recrystallize, forming less reactive crystalline phases such as mullite or cristobalite.

In a preferred embodiment of the present invention, the raw clay has a BET surface area greater than 50 m²/g. This high surface area of the raw material mixture enhances the performance of the resulting calcined clay. A high BET surface area of the raw clay indicates a large available surface area for chemical reactions to occur during the calcination process and subsequent cement hydration. The increased surface area promotes the formation of reactive silica and alumina phases during calcination, as there is a greater interface between the solid particles and the gas phase. This enhanced reactivity of the silica and alumina phases is beneficial for the pozzolanic reactivity of the calcined material, as they readily react with calcium hydroxide during cement hydration to form additional strength-contributing compounds, such as calcium silicate hydrates (C-S-H), calcium aluminate hydrates (C-A-H), and calcium aluminate silicate hydrates (C-A-S-H)

In a preferred embodiment, the raw clay is calcined over a time period of 15-240 minutes. The calcination time period of 15-240 minutes provides sufficient time for the raw material mixture to undergo the necessary chemical and physical transformations, while avoiding excessive energy consumption and potential degradation of the reactive phases.

Several methods may be used for calcining the raw material mixture, with the choice of the method being determined by factors such as the scale of production, the specific nature of the raw materials, and the desired characteristics of the final product.

According to one alternative a rotary kiln calcination may be carried out. This involves feeding the raw material mixture into a rotating cylindrical furnace, where it is heated to a desired temperature range. The rotation of the kiln ensures thorough mixing and even heating of the material, promoting consistent and efficient dehydroxylation of the clay minerals.

Alternatively, a vertical shaft kiln may be used for calcination. The raw clay is loaded at the top of a tall, vertical furnace and heated as it descends through the kiln, undergoing the necessary chemical transformations.

Alternatively, a fluidized bed calcination may be used, which is a method wherein the raw clay is suspended in a rising flow of hot gas. This ensures very high heat and mass transfer rates, providing rapid, uniform calcination.

Th limestone used in the mineral composition may preferably have a D50 from 2µm-20µm, more preferably from 5µm-15µm determined by laser diffraction.

The term "Portland cement", also referred to as "Ordinary Portland Cement (OPC)", refers to a type of hydraulic cement that sets, hardens, and adheres to other materials to bind them together. The primary components of Portland cement are calcium, silicon, aluminum, and iron, which are typically derived from limestone, clay, and other natural materials. These materials are crushed, combined, and heated in a kiln to a high temperature to produce clinker. This clinker is then ground into a fine powder, often with a small amount of gypsum added to control the setting time of the final product.

Therefore, the Portland cement preferably is a cement of the type "CEM I", as defined in European standard EN 197-1:2011. It consists of 95-100% Portland cement clinker and up to 5% of a minor additional constituent, such as gypsum, that enhances the properties or the workability of the cement.

Preferably, the hydraulic cement composition of the invention is a cement of the type CEM II/C-M, as defined in European standard NF EN 197-5:2021. This type of cement is defined by a Portland cement content of 50-64 wt.-%, a combined content of limestone and calcined clay of 36-50 wt.-% and an optional content of minor additional constituents (0-5 wt.-%).

Preferably, the hydraulic cement of the invention is a cement of the type CEM II/C-M (Q-LL), as defined in European standard EN 197-5:2021. This type of cement is defined by a Portland cement content of 50-64 wt.-% and a combined content of limestone and calcined clay of 36-50 wt.-%.

According to a second aspect, the invention refers to the use of a mineral composition consisting of calcined clay and limestone in a weight ratio of > 3, for improving the creep resistance of a hydraulic cement composition according to the first aspect of the invention.

According to a third aspect, the invention provides a cement matrix formed by chemically reacting a hydraulic cement composition according to the first aspect of the invention with water and hardening the same. It was found that such a cement matrix has a creep modulus after 28 days of > 35 GPa, preferably > 40 GPa. The creep modulus was measured by the method described in the examples section.

According to a fourth aspect, the invention provides a concrete or mortar comprising aggregates bonded together by means of a cement matrix according to the third aspect of the invention.

In the following, the invention will be explained in more detail with reference to exemplary embodiments.

In the examples, several hydraulic cement compositions were prepared from the following components:

### Portland cement

A CEM I 52.5 N cement obtained from Saint-Pierre-la-Cour plant (Lafarge France)was used.

### Calcined clay

A calcined clay with a Specific Surface Blaine of 11370 cm²/g and a metakaolin content of 40.7 wt%. was used.

### Limestone

A limestone with D50=9.3 µm supplied by Omya (sold under the commercial name Orgon BL200) was used.

### Gypsum

A gypsum supplied by Lafarge France (Le Teil plant) was used.

The hydraulic cement composition was prepared by mixing all components and adding water in a water/binder ratio of 0.5.

Specimens of hardened cement paste were prepared by mixing the binder and added water in a NF EN 196-1/NF EN 196-9 mortar mixer. The fresh cement paste was then poured into cylindrical plastic molds of 2 cm in diameter and 7 cm high and kept in a moist room at 20°C.

The creep performance of the specimens was measured after the specimen having hardened for 28 days. Creep performance is characterized by measuring the creep modulus. A higher modulus means higher resistance to creep.

The creep modulus was determined in a microindentation test. In the microindentation test, a controlled force is applied to the surface of a material and the resulting indentation is measured to determine creep behavior.

The indentation was measured using Anton Paar's MCT3 Step 500 system with a Vickers indenter head on a 10 mm thick disk cut without the use of water from the central portion of a cylindrical cement paste sample which had been kept sealed until the time of testing.

The surface to be tested was polished for a total of 3 minutes using 3 pads of silicon carbide paper (grades P600, P1200 and P2400) without any contact with water or other solvents. Finally, a protective film was applied to the polished surface to minimize drying prior to testing.

The measurement was performed by applying an incremental load, with linear loading and unloading at a rate of 40N/min, a maximum applied force of 10N, and a dwell time of 300 seconds. Each creep test consisted of 5 repeated measurements distributed over the surface of the cement paste specimen, performed at 7 and 28 days after specimen preparation. The loading and unloading curves of the applied load as a function of displacement and penetration depth were recorded.

A 300-second hold is applied to determine the contact creep modulus (expressed in GPa), which is calculated using the method described by Zhang et al, Cement and Concrete Research 58 (2014) 89-98.

The technique allows a very quick evaluation of the creep performance of cement paste, that was proven to give the same tendency as seen at concrete level.

Table 1 provides the compositions of the examples as well as their mechanical properties.

**Table 1**

| Mix N° | **Cement composition** | | | | | **Mechanical properties** | |
|---|---|---|---|---|---|---|---|
| | CEM I 52.5 N [wt.%] | Mineral composition | | | Gypsum [wt.%] | | |
| | | Calcined clay [wt.%] | Limestone [wt.%] | Calcined clay/Limes tone | | Cs 28D (Mpa) | Creep modulus 28D (GPa) |
| 0 (Reference) | 100 | 0 | 0 | - | - | 64.40 | 21.03 |
| Comparative example 1 | 65 | 35 | 0 | - | - | 49.98 | 36.11 |
| Comparative example 2 | 57 | 42.25 | 0 | - | 0.75 | 41.87 | 36.37 |
| Comparative example 3 | 49.5 | 49.5 | 0 | - | 1 | 35.12 | 31.95 |
| 4 | 65 | 25 | 10 | 2.5 | - | 60.74 | 3.,4 |
| 5 | 57.5 | 32.5 | 9.25 | 3.5 | 0.75 | 57.1 | 37.71 |
| 6 | 50 | 37,5 | 11.5 | 3.3 | 1 | 46.76 | 36.93 |
| 7 | 57.5 | 25 | 16.75 | 1.5 | 0.75 | 52.62 | 30.37 |
| 8 | 50 | 25 | 24.25 | 1.0 | 0.75 | 46.46 | 26.05 |
| 9 | 65 | 31 | 4 | 7.75 | - | 58.09 | 41.48 |
| 10 | 57 | 38.25 | 4 | 9.6 | 0.75 | 53.11 | 42.15 |

To demonstrate the effect of the combined application of the calcined clay along with limestone and the effect on creep properties the creep modulus was compared for mix designs with equal or comparable OPC content and equal substitution rate, but varying ration of calcined clay/limestone:
Group 1, comprising 65% OPC and 35% of the mineral composition: Comparative examples 1 and examples 4 and 9
Group 2, comprising approx. 57% OPC and approx. 42.25% of the mineral composition: Comparative example 2 and examples 5, 7 and 10
Group 3, comprising approx. 50% OPC and approx. 49% of the mineral composition: Comparative examples 3 and examples 6 and 8.

### Findings:

- Comparative examples 1, 2 and 3 all demonstrate that the addition of calcined clay has a positive effect on creep modulus (as known from prior art). Even at 50% replacement of OPC the creep modulus is increase compared to the reference composition.
- The addition of limestone along with calcined clay results in further increase of creep modulus, but only when ratio of calcined clay to limestone (CC/L ratio) is above approx. 3 and the amount of limestone does not exceed 9 wt.-%.
- Group 1: Having added limestone in example 4 in a CC/L ratio of 2.5 does not increase the creep modulus when compared to comparative example 1. However, in example 9, a significant increase of the creep modulus could be observed when using a CC/L ratio of 7.75 and having a limestone content of below 9 wt.-%. Comparing comparative example 1 with example 9 demonstrates that despite the same OPC content and lower calcined clay content for example 9, a higher creep modulus can be achieved.
- Group 2: Having added limestone in example 5 in a CC/L ratio of 3.5 does not significantly increase the creep modulus when compared to comparative example 2, because the amount of limestone was above 9 wt.-%. In example 7, the CC/L ratio is below 3 and the amount of limestone was above 9 wt.-%, so that the creep modulus decreased when compared to comparative example 2 and example 4. However, in example 10, a significant increase of the creep modulus could be observed when using a CC/L ratio of 9.6 and having a limestone content of below 9 wt.-%.
- Group 3: Having added limestone in example 6 in a CC/L ratio of 3.3 does not significantly increase the creep modulus when compared to comparative example 3, because the amount of limestone was above 9 wt.-%. In example 8, a decrease of the creep modulus was observed when using a CC/L ratio of 1 and having a limestone content of significantly above 9 wt.-%.

## Claims

1. A hydraulic cement composition comprising ≥ 45 wt.-% Portland cement and ≤ 55 wt.-% of a mineral composition, said mineral composition consisting of calcined clay and limestone in a weight ratio of calcined clay/limestone of > 3, wherein the limestone is present in an amount of 1-9 wt.-% based on the hydraulic cement composition.

2. The hydraulic cement composition according to claim 1, wherein the limestone is present in an amount of 3-9 wt.-%, preferably 3-7 wt.-%, preferably 3-5 wt.-%, based on the hydraulic cement composition.

3. The hydraulic cement composition according to claim 1 or 2, wherein the weight ratio of calcined clay/limestone is 3.3-10, preferably 6-10.

4. The hydraulic cement composition according to claim 1, 2 or 3, wherein the mineral composition is present in an amount of 15-55 wt.-%, preferably 30-55 wt.-%, based on the hydraulic cement composition.

5. The hydraulic cement composition according to any one of claims 1 to 4, wherein the mineral composition and the Portland cement together constitute > 90 wt.-%, preferably > 95 wt.-%, preferably 100 wt.-%, of the hydraulic cement composition.

6. The hydraulic cement composition according to any one of claims 1 to 5, wherein the calcined clay comprises < 50 wt.-%, preferably 40-50 wt.-%, metakaolin.

7. Use of a mineral composition consisting of calcined clay and limestone in a weight ratio of > 3, for improving the creep resistance of a hydraulic cement composition according to any one of claims 1 to 6.

8. A cement matrix formed by chemically reacting a hydraulic cement composition according to any one of claims 1 to 6 with water and hardening the same.

9. The cement matrix according to claim 8, wherein the cement matrix has a creep modulus after 28 days of > 35 GPa, preferably > 40 GPa.

10. A concrete or mortar comprising aggregates bonded together by means of a cement matrix according to claim 8 or 9.
